# EUROPEAN PATENT APPLICATION

(11) **EP 4 531 396 A1**
(43) Date of publication of application: **02.04.2025**
(21) Application number: 23839335.9
(22) Date of filing: 01.06.2023
(51) Int. Cl.: H04N 19/30, H04N 19/46, H04N 19/85

(54) **IMAGE ENCODING DEVICE, IMAGE DECODING DEVICE, IMAGE ENCODING METHOD, AND IMAGE DECODING METHOD**

(30) Priority: 13.07.2022 US 202263388743 P
(71) Applicant: Panasonic Intellectual Property Corporation of America, Torrance, CA 90504 (US)
(72) Inventor: GAO, Jingying, Singapore 469332 (SG); TEO, Han Boon, Singapore 469332 (SG); LIM, Chong Soon, Singapore 469332 (SG); YADAV, Praveen Kumar, Singapore 469332 (SG); ABE, Kiyofumi, Kadoma-shi, Osaka 571-8501 (JP); NISHI, Takahiro, Kadoma-shi, Osaka 571-0057 (JP); TOMA, Tadamasa, Kadoma-shi, Osaka 571-0057 (JP)
(74) Representative: Grünecker Patent- und Rechtsanwälte PartG mbB
(86) International application number: PCT/JP2023/020426
(87) International publication number: WO 2024/014158

(57) **Abstract**

An image decoder includes circuitry and a memory connected to the circuitry. In operation, the circuitry decodes a first bitstream to acquire a first image, decodes a second bitstream to acquire specification information specifying a particular region in the first image and a second image containing image data for the particular region, and generates a third image based on the first image, the specification information, and the second image.

## Description

### Technical Field

The present disclosure relates to an image encoder, an image decoder, an image encoding method, and an image decoding method.

### Background Art

Patent Literature 1 discloses a video encoding method and a decoding method using an adaptive coupled prefilter and postfilter.

Patent Literature 2 discloses a method of encoding image data for loading into an artificial intelligence (AI) integrated circuit.

### Citation List

### Patent Literatures

Patent Literature 1: US 9,883,207
Patent Literature 2: US 10,452,955

### Summary of Invention

An object of the present disclosure is to enable both protection of personal privacy information and execution of a machine task or provision of human vision using such privacy information on an image decoder when an image is transmitted from an image encoder to the image decoder.

An image decoder according to one aspect of the present disclosure includes: circuitry; and a memory connected to the circuitry, in which, in operation, the circuitry decodes a first bitstream to acquire a first image, decodes a second bitstream to acquire specification information specifying a particular region in the first image and a second image containing image data for the particular region, and generates a third image based on the first image, the specification information, and the second image.

### Brief Description of Drawings

FIG. 1 is a diagram illustrating a simplified configuration of an image processing system according to an embodiment of the present disclosure.
FIG. 2 is a flowchart illustrating a flow of processing executed by an image encoder.
FIG. 3 is a diagram illustrating an example of an input image.
FIG. 4 is a diagram illustrating a bounding box as an example of a particular region.
FIG. 5A is a diagram illustrating an example of specification information.
FIG. 5B is a diagram illustrating an example of specification information.
FIG. 5C is a diagram illustrating an example of specification information.
FIG. 5D is a diagram illustrating an example of specification information.
FIG. 5E is a diagram illustrating an example of specification information.
FIG. 5F is a diagram illustrating an example of specification information.
FIG. 6 is a diagram illustrating an example of a first image.
FIG. 7A is a diagram illustrating an example of a second image.
FIG. 7B is a diagram illustrating an example of a second image.
FIG. 7C is a diagram illustrating an example of a second image.
FIG. 7D is a diagram illustrating an example of a second image.
FIG. 7E is a diagram illustrating an example of a second image.
FIG. 7F is a diagram illustrating an example of a second image.
FIG. 7G is a diagram illustrating an example of a second image.
FIG. 7H is a diagram illustrating an example of a second image.
FIG. 8 is a diagram illustrating a first example in which a plurality of bounding boxes partially overlap each other in a second image.
FIG. 9A is a diagram illustrating a second example in which a plurality of bounding boxes partially overlap each other in a second image.
FIG. 9B is a diagram illustrating a second example in which a plurality of bounding boxes partially overlap each other in a second image.
FIG. 10A is a diagram illustrating a first example of a data structure of a bitstream.
FIG. 10B is a diagram illustrating a first example of a data structure of a bitstream.
FIG. 11 is a flowchart illustrating a flow of processing executed by an image decoder.
FIG. 12 is a diagram illustrating a simplified implementation example of the image encoder.
FIG. 13 is a diagram illustrating a simplified implementation example of the image decoder.

### Description of Embodiments

### (Knowledge underlying present disclosure)

A conventional encoding method has aimed to provide optimal video under bit rate constraints for human vision.

With the progress of machine learning or neural network-based applications along with abundant sensors, many intelligent platforms that handle large amounts of data, including connected cars, video surveillance, and smart cities have been implemented. Since large amounts of data are constantly generated, the conventional method involving humans in pipelines has become inefficient and unrealistic in terms of latency and scale.

Furthermore, in transmission and archive systems, there is a concern that more compact data representation and low-latency solutions are required, and therefore, video coding for machines (VCM) has been introduced.

In some cases, machines can communicate with each other and execute tasks without human intervention, while in other cases, additional processing by humans may be necessary for decompressed specific streams. Such cases include a case where for example, in surveillance cameras, a human "supervisor" searches for a specific person or scene in a video.

In other cases, corresponding bitstreams are used by both humans and machines. For connected cars, features can be used for image correction functions for humans and used for object detection and segmentation for machines.

Typical system architecture includes a pair of image encoder and image decoder. The input of the system is a video, a still image, or a feature quantity. Examples of a machine task include object detection, object segmentation, object tracking, action recognition, pose estimation, or a discretionary combination thereof. There is a possibility that human vision is one of the use cases that can be used along with the machine task.

According to conventional techniques, if a captured image contains privacy information such as an individual's face and a vehicle tag, the image containing privacy information is transmitted from the image encoder to the image decoder even when the machine task does not require such information. This may result in a leakage of the privacy information. Meanwhile, although transmission of an image in which masking such as blurring processing is applied to privacy information from the image encoder to the image decoder can be considered, there is a problem that privacy information cannot be used when such information is needed for a machine task or human vision.

To solve such a problem, the present inventors have conceived the present disclosure based on the finding that the above problem can be solved by transmitting a bitstream of an image containing privacy information and a bitstream of an image not containing privacy information individually from an image encoder to an image decoder and combining these images on the image decoder when privacy information is necessary.

Next, each aspect of the present disclosure will be described.

An image decoder according to a first aspect of the present disclosure includes: circuitry; and a memory connected to the circuitry, in which, in operation, the circuitry decodes a first bitstream to acquire a first image, decodes a second bitstream to acquire specification information specifying a particular region in the first image and a second image containing image data for the particular region, and generates a third image based on the first image, the specification information, and the second image.

According to the first aspect, the image decoder is designed to protect personal privacy information by not allowing privacy information to be included in the first bitstream. By transmitting the second image containing privacy information as the second bitstream and generating the third image based on the second image, an image processing system is designed to execute a machine task or provide human vision using privacy information on the image decoder.

In accordance with a second aspect of the present disclosure, in the image decoder according to the first aspect, the particular region in the first image preferably includes an image in which masking is applied to a privacy region including privacy information.

According to the second aspect, privacy information included in the particular region in the first image can be appropriately protected by masking.

In accordance with a third aspect of the present disclosure, in the image decoder according to the second aspect, the second image and the third image each preferably contain an image in which the masking is not applied to the privacy region included in the particular region.

According to the third aspect, the second image and the third image each contain an image in which the masking is not applied to the privacy region included in the particular region. This makes it possible to appropriately execute a machine task or provide human vision using privacy information on the image decoder.

In accordance with a fourth aspect of the present disclosure, in the image decoder according to the first aspect, the particular region in the first image includes an image in which masking is applied to a privacy region including privacy information, the second image contains an image in which the masking is not applied to the privacy region included in the particular region, and the circuitry, in generation of the third image, generates the third image using the first image for an application of an image with masked privacy information, and generates the third image using the first image and the second image for an application of an image with unmasked privacy information.

According to the fourth aspect, the image processing system is designed to switch between a machine task or human vision using an image with masked privacy information and a machine task or human vision using an image with unmasked privacy information on the image decoder and execute any of these.

In accordance with a fifth aspect of the present disclosure, in the image decoder according to any one of the first to fourth aspects, the specification information preferably includes information indicating a position and a size of the particular region in the first image.

According to the fifth aspect, the position and the size of the particular region in the first image can be appropriately specified by the specification information.

In accordance with a sixth aspect of the present disclosure, in the image decoder according to the fifth aspect, the specification information preferably further includes information indicating a correspondence relationship between the particular region in the first image and the second image.

According to the sixth aspect, the correspondence relationship between the particular region in the first image and the second image can be appropriately specified by the specification information.

In accordance with a seventh aspect of the present disclosure, in the image decoder according to any one of the first to sixth aspects, the circuitry preferably decodes a header area of the second bitstream to acquire the specification information.

According to the seventh aspect, the specification information is stored in the header area of the second bitstream. This makes it possible to readily decode the specification information from the second bitstream.

In accordance with an eighth aspect of the present disclosure, in the image decoder according to any one of the first to seventh aspects, it is preferred that, out of the specification information, information indicating a position and a size of the particular region in the first image be stored in a header area of the first bitstream, and that the circuitry decode the header area of the first bitstream to acquire the information.

According to the eighth aspect, information that is basically included in the header area of the first bitstream can be used as specification information.

In accordance with a ninth aspect of the present disclosure, in the image decoder according to any one of the first to eighth aspects, the image data contained in the second image is preferably image data about a difference between the particular region inside the first image and the particular region inside the third image.

According to the ninth aspect, a coding amount transmitted from an image encoder to the image decoder can be reduced compared with a case where image data for the particular region that is unmasked is transmitted.

In accordance with a tenth aspect of the present disclosure, in the image decoder according to any one of the first to eighth aspects, the image data contained in the second image is preferably image data for the particular region in the third image.

According to the tenth aspect, the circuitry just needs to replace image data for the particular region in the first image with the image data in the second image. This helps to reduce a processing load on the circuitry.

In accordance with an eleventh aspect of the present disclosure, in the image decoder according to any one of the first to tenth aspects, it is preferred that the particular region include a plurality of particular regions, and that a picture of the second bitstream include the image data for one of the plurality of particular regions.

According to the eleventh aspect, the picture of the second bitstream only includes the image data for the one particular region. This makes it easier to associate each of the particular regions inside the first image with the second image.

In accordance with a twelfth aspect of the present disclosure, in the image decoder according to any one of the first to tenth aspects, it is preferred that the particular region include a plurality of particular regions, and that a picture of the second bitstream include the image data for the plurality of particular regions.

According to the twelfth aspect, the picture of the second bitstream includes the image data for the plurality of particular regions. This helps to reduce a number of pictures of the second bitstream to be transmitted from an image encoder to the image decoder.

In accordance with a thirteenth aspect of the present disclosure, in the image decoder according to any one of the first to twelfth aspects, the particular region is preferably included in one or more coding unit blocks that compose a picture of the second bitstream.

According to the thirteenth aspect, the particular region is included in one or more coding unit blocks. This enables the circuitry to appropriately decode the particular region.

In accordance with a fourteenth aspect of the present disclosure, in the image decoder according to any one of the first to twelfth aspects, the particular region is preferably included in either a subpicture or a tile that composes a picture of the second bitstream.

According to the fourteenth aspect, the particular region is included in a subpicture or a tile. This enables the circuitry to appropriately decode the particular region.

In accordance with a fifteenth aspect of the present disclosure, in the image decoder according to any one of the first to fourteenth aspects, it is preferred that the particular region include a plurality of particular regions, and that the second image contain the image data associated with the plurality of particular regions.

According to the fifteenth aspect, even if a plurality of target objects such as persons move closer to or away from each other in a captured image, for example, one piece of the second image can contain the plurality of particular regions corresponding to the plurality of target objects.

In accordance with a sixteenth aspect of the present disclosure, in the image decoder according to any one of the first to fifteenth aspects, a picture size of the first bitstream and a picture size of the second bitstream are preferably equal to each other.

According to the sixteenth aspect, the picture size of the first bitstream and the picture size of the second bitstream are equal to each other. This makes it easier to associate the particular region inside the first image with the second image.

In accordance with a seventeenth aspect of the present disclosure, in the image decoder according to any one of the first to sixteenth aspects, a picture of the second bitstream is preferably an intra-coded picture for which intra frame prediction is performed.

According to the seventeenth aspect, since the picture of the second bitstream is an intra-coded picture, factors such as movement of a target object over time are not required to be taken into consideration. This eliminates the need for storing a previous frame and calculating a difference from the previous frame, for example.

In accordance with an eighteenth aspect of the present disclosure, in the image decoder according to any one of the first to sixteenth aspects, a picture of the second bitstream is preferably an inter frame picture for which inter frame prediction is performed using a reference picture that is acquired by decoding either the second bitstream or the first bitstream.

According to the eighteenth aspect, the picture of the second bitstream is an inter frame picture, thus making it possible to reduce a coding amount.

In accordance with a nineteenth aspect of the present disclosure, in the image decoder according to any one of the first to eighteenth aspects, it is preferred that the first bitstream be transmitted from an image encoder to the image decoder by a base layer in a multilayer form, and that the second bitstream be transmitted from the image encoder to the image decoder by an enhancement layer in the multilayer form.

According to the nineteenth aspect, the first bitstream and the second bitstream can be readily transmitted by the base layer and the enhancement layer in the multilayer form standardized by VVC or other standards.

In accordance with a twentieth aspect of the present disclosure, in the image decoder according to any one of the first to nineteenth aspects, the first bitstream and the second bitstream are preferably transmitted from an image encoder to the image decoder by different transmission lines.

According to the twentieth aspect, the first bitstream is transmitted by the transmission line such as a public network, and the second bitstream is transmitted by the transmission line such as a private network. This enables both reduction of transmission costs and protection of privacy information.

An image encoder according to a twenty-first aspect of the present disclosure includes: circuitry; and a memory connected to the circuitry, in which, in operation, the circuitry specifies a particular region in an input image, generates specification information about the particular region, generates a first image in which the particular region is processed in the input image, generates a second image that contains image data associated with the particular region, encodes the first image to generate and output a first bitstream, and encodes the specification information and the second image to generate and output a second bitstream.

According to the twenty-first aspect, the image encoder is designed to protect personal privacy information by not allowing privacy information to be included in the first bitstream. By transmitting the second image containing privacy information as the second bitstream from the image encoder to an image decoder and enabling the image decoder to generate an image containing privacy information based on the first and the second images, the image processing system is designed to execute a machine task or provide human vision using privacy information on the image decoder.

In accordance with a twenty-second aspect of the present disclosure, in the image encoder according to the twenty-first aspect, the particular region in the first image preferably includes an image in which masking is applied to a privacy region including privacy information.

According to the twenty-second aspect, privacy information included in the particular region in the first image can be appropriately protected by masking.

In accordance with a twenty-third aspect of the present disclosure, in the image encoder according to the twenty-second aspect, the second image preferably contains an image in which the masking is not applied to the privacy region included in the particular region.

According to the twenty-third aspect, the second image and a third image each contain an image in which the masking is not applied to the privacy region included in the particular region. This makes it possible to appropriately execute a machine task or provide human vision using privacy information on the image decoder.

In accordance with a twenty-fourth aspect of the present disclosure, in the image encoder according to any one of the twenty-first to twenty-third aspects, the specification information preferably includes information indicating a position and a size of the particular region in the first image.

According to the twenty-fourth aspect, the position and the size of the particular region in the first image can be appropriately specified by the specification information.

In accordance with a twenty-fifth aspect of the present disclosure, in the image encoder according to the twenty-fourth aspect, the specification information preferably further includes information indicating a correspondence relationship between the particular region in the first image and the second image.

According to the twenty-fifth aspect, the correspondence relationship between the particular region in the first image and the second image can be appropriately specified by the specification information.

In accordance with a twenty-sixth aspect of the present disclosure, in the image encoder according to any one of the twenty-first to twenty-fifth aspects, the circuitry preferably stores the specification information in a header area of the second bitstream.

According to the twenty-sixth aspect, the specification information is stored in the header area of the second bitstream. This enables an image decoder to readily decode the specification information from the second bitstream.

In accordance with a twenty-seventh aspect of the present disclosure, in the image encoder according to any one of the twenty-first to twenty-sixth aspects, the circuitry preferably stores information out of the specification information in a header area of the first bitstream, the information indicating a position and a size of the particular region in the first image.

According to the twenty-seventh, information that is basically included in the header area of the first bitstream can be used as specification information.

In accordance with a twenty-eighth aspect of the present disclosure, in the image encoder according to any one of the twenty-first to twenty-seventh aspects, the image data contained in the second image is preferably image data about a difference between the particular region inside the input image and the particular region inside the first image.

According to the twenty-eighth aspect, a coding amount transmitted from an image encoder to the image decoder can be reduced compared with a case where image data for the particular region that is unmasked is transmitted.

In accordance with a twenty-ninth aspect of the present disclosure, in the image encoder according to any one of the twenty-first to twenty-seventh aspects, the image data contained in the second image is preferably image data for the particular region in the input image.

According to the twenty-ninth aspect, an image decoder just needs to replace image data for the particular region in the first image with the image data in the second image. This helps to reduce a processing load on the image decoder.

In accordance with a thirtieth aspect of the present disclosure, in the image encoder according to any one of the twenty-first to twenty-ninth aspects, it is preferred that the particular region include a plurality of particular regions, and that a picture of the second bitstream include the image data for one of the plurality of particular regions.

According to the thirtieth aspect, the picture of the second bitstream only includes the image data for the one particular region. This makes it easier to associate each of the particular regions inside the first image with the second image.

In accordance with a thirty-first aspect of the present disclosure, in the image encoder according to any one of the twenty-first to twenty-ninth aspects, it is preferred that the particular region include a plurality of particular regions, and that a picture of the second bitstream include the image data for the plurality of particular regions.

According to the thirty-first aspect, the picture of the second bitstream includes the image data for the plurality of particular regions. This helps to reduce a number of pictures of the second bitstream to be transmitted from the image encoder to an image decoder.

In accordance with a thirty-second aspect of the present disclosure, in the image encoder according to any one of the twenty-first to thirty-first aspects, the particular region is preferably included in one or more coding unit blocks that compose a picture of the second bitstream.

According to the thirty-second aspect, the particular region is included in one or more coding unit blocks. This enables an image decoder to appropriately decode the particular region.

In accordance with a thirty-third aspect of the present disclosure, in the image encoder according to any one of the twenty-first to thirty-first aspects, the particular region is preferably included in either a subpicture or a tile that composes a picture of the second bitstream.

According to the thirty-third aspect, the particular region is included in a subpicture or a tile. This enables an image decoder to appropriately decode the particular region.

In accordance with a thirty-fourth aspect of the present disclosure, in the image encoder according to any one of the twenty-first to thirty-third aspects, it is preferred that the particular region include a plurality of particular regions, and that the second image contain the image data associated with the plurality of particular regions.

According to the thirty-fourth aspect, even if a plurality of target objects such as persons move closer to or away from each other in a captured image, for example, one piece of the second image can contain the plurality of particular regions corresponding to the plurality of target objects.

In accordance with a thirty-fifth aspect of the present disclosure, in the image encoder according to any one of the twenty-first to thirty-fourth aspects, a picture size of the first bitstream and a picture size of the second bitstream are preferably equal to each other.

According to the thirty-fifth aspect, the picture size of the first bitstream and the picture size of the second bitstream are equal to each other. This makes it easier to associate the particular region inside the first image with the second image.

In accordance with a thirty-sixth aspect of the present disclosure, in the image encoder according to any one of the twenty-first to thirty-fifth aspects, a picture of the second bitstream is preferably an intra-coded picture for which intra frame prediction is performed.

According to the thirty-sixth aspect, since the picture of the second bitstream is an intra-coded picture, factors such as movement of a target object over time are not required to be taken into consideration. This eliminates the need for storing a previous frame and calculating a difference from the previous frame, for example.

In accordance with a thirty-seventh aspect of the present disclosure, in the image encoder according to any one of the twenty-first to thirty-fifth aspects, a picture of the second bitstream is preferably an inter frame picture for which inter frame prediction is performed using a reference picture that is acquired by decoding either the second bitstream or the first bitstream.

According to the thirty-seventh aspect, the picture of the second bitstream is an inter frame picture, thus making it possible to reduce a coding amount.

In accordance with a thirty-eighth aspect of the present disclosure, in the image encoder according to any one of the twenty-first to thirty-seventh aspects, the circuitry preferably transmits the first bitstream to an image decoder by a base layer in a multilayer form and transmits the second bitstream to the image decoder by an enhancement layer in the multilayer form.

According to the thirty-eighth aspect, the first bitstream and the second bitstream can be readily transmitted by the base layer and the enhancement layer in the multilayer form standardized by VVC or other standards.

In accordance with a thirty-ninth aspect of the present disclosure, in the image encoder according to any one of the twenty-first to thirty-eighth aspects, the circuitry preferably transmits the first bitstream and the second bitstream to an image decoder by different transmission lines.

According to the thirty-ninth aspect, the first bitstream is transmitted by the transmission line such as a public network, and the second bitstream is transmitted by the transmission line such as a private network. This enables both reduction of transmission costs and protection of privacy information.

An image decoding method according to a fortieth aspect of the present disclosure includes: decoding a first bitstream to acquire a first image; decoding a second bitstream to acquire specification information specifying a particular region in the first image and a second image containing image data for the particular region; and generating a third image based on the first image, the specification information, and the second image.

According to the fortieth aspect, the image decoding method is designed to protect personal privacy information by not allowing privacy information to be included in the first bitstream. By transmitting the second image containing privacy information as the second bitstream and generating the third image based on the second image, an image processing system is designed to execute a machine task or provide human vision using privacy information on the image decoder.

An image encoding method according to a forty-first aspect of the present disclosure includes: specifying a particular region in an input image, generating specification information about the particular region; generating a first image in which the particular region is processed in the input image; generating a second image that contains image data associated with the particular region; encoding the first image to generate and output a first bitstream; and encoding the specification information and the second image to generate and output a second bitstream.

According to the forty-first aspect, the image encoding method is designed to protect personal privacy information by not allowing privacy information to be included in the first bitstream. By transmitting the second image containing privacy information as the second bitstream from the image encoder to an image decoder and enabling the image decoder to generate an image containing privacy information based on the first and the second images, the image processing system is designed to execute a machine task or provide human vision using privacy information on the image decoder.

### (Embodiments of present disclosure)

Embodiments of the present disclosure will be described below in detail with reference to the drawings. Note that elements denoted by the same reference signs in different drawings represent the same or corresponding elements.

Embodiments to be described below will each refer to a specific example of the present disclosure. The numerical values, shapes, constituent elements, steps, orders of the steps, and the like of the following embodiments are merely examples, and do not intend to limit the present disclosure. A constituent element not described in an independent claim representing the highest concept among constituent elements in the embodiments below is described as an arbitrary constituent element. In all the embodiments, respective contents can be combined.

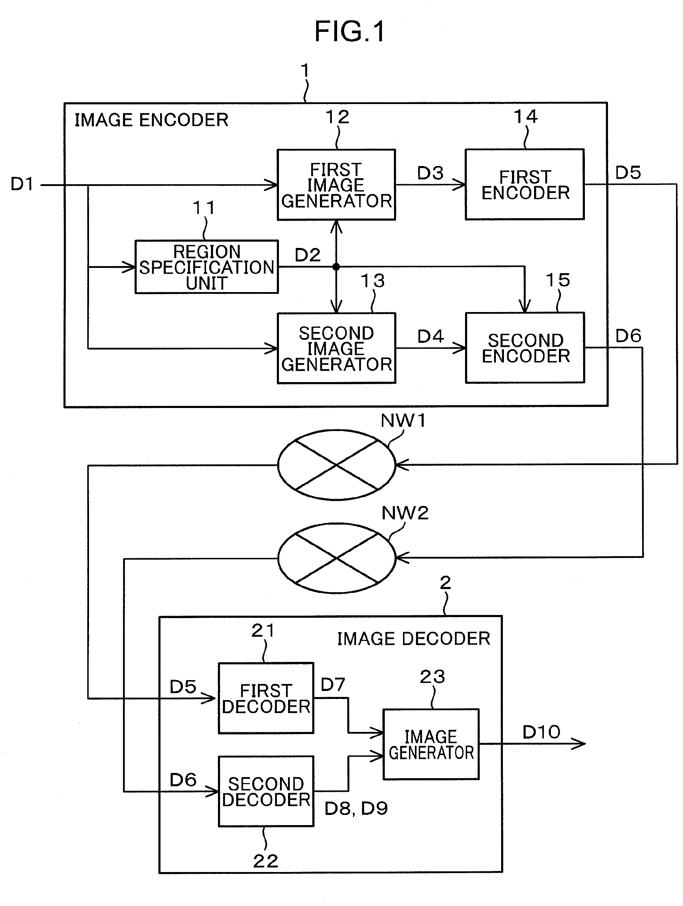

FIG. 1 is a diagram illustrating a simplified configuration of an image processing system according to an embodiment of the present disclosure. The image processing system includes an image encoder 1, transmission lines NW1, NW2, and an image decoder 2.

The image encoder 1 includes a region specification unit 11, a first image generator 12, a second image generator 13, a first encoder 14, and a second encoder 15.

The region specification unit 11 specifies a particular region in an input image D1 and generates specification information D2 about the particular region. The first image generator 12 generates a first image D3 in which the particular region is processed in the input image D1. The second image generator 13 generates a second image D4 that contains image data associated with the particular region. The first encoder 14 encodes the first image D3 to generate and output a first bitstream D5. The first bitstream D5 is transmitted to the image decoder 2 via the transmission line NW1. The second encoder 15 encodes the specification information D2 and the second image D4 to generate and output a second bitstream D6. The second bitstream D6 is transmitted to the image decoder 2 via the transmission line NW2 different from the transmission line NW1.

The transmission lines NW1, NW2 are each the Internet, a wide area network (WAN), a local area network (LAN), or a combination of any of these. The transmission lines NW1, NW2 are each not necessarily limited to a bidirectional communication network, but may be a unidirectional communication network through which broadcast waves are transmitted by broadcasting such as terrestrial digital broadcasting or satellite broadcasting. The transmission lines NW1, NW2 may each be a recording medium such as a digital versatile disc (DVD) or a Blu-ray disc (BD) on which the first bitstream D5 or the second bitstream D6 is recorded. The transmission line NW1 is a public network, for example, whereas the transmission line NW2 is a private network or the like for secured communication with limited access. If different limitations can be placed on access to the first bitstream D5 and the second bitstream D6, the transmission lines NW1, NW2 may be physically identical communication networks or recording media.

The image decoder 2 includes a first decoder 21, a second decoder 22, and an image generator 23.

The first decoder 21 receives the first bitstream D5 transmitted from the first encoder 14 via the transmission line NW1. The first decoder 21 decodes the received first bitstream D5 to acquire a first image D7 equivalent to the first image D3.

The second decoder 22 receives the second bitstream D6 transmitted from the second encoder 15 via the transmission line NW2. The second decoder 22 decodes the received second bitstream D6 to acquire specification information D8 equivalent to the specification information D2 and a second image D9 equivalent to the second image D4.

The image generator 23 generates a third image D10 equivalent to the input image D1, based on the first image D7, the specification information D8, and the second image D9. Specifically, in a use case in which an image not containing privacy information is used (i.e., an application of an image with masked privacy information), the image generator 23 generates the third image D10 using the first image D7 as it is, for example. The use case in which an image not containing privacy information is used is a case in which the image is viewed by a user who does not have a special right to access such information or the image is used for a machine task that does not require detailed information such as a face or a vehicle tag, for example. In a use case in which an image containing privacy information is used (i.e., an application of an image with unmasked privacy information), the image generator 23, based on the specification information D8, generates a third image D10 using the first image D7 and the second image D9 for image data in the particular region and generates a third image D10 using the first image D7 for image data outside the particular region, for example. The use case in which an image containing privacy information is used is a case in which the image is viewed by a user who has a special right to access such information or the image is used for a machine task that also requires detailed information such as a face or a vehicle tag, for example. In this manner, by switching between ways of generating the third image D10 depending on the application of the image, the image processing system is designed to switch between a machine task or human vision using an image with masked privacy information and a machine task or human vision using an image with unmasked privacy information on the image decoder 2 and execute any of these. The machine task is, for example, object detection, object segmentation, object tracking, action recognition, or pose estimation.

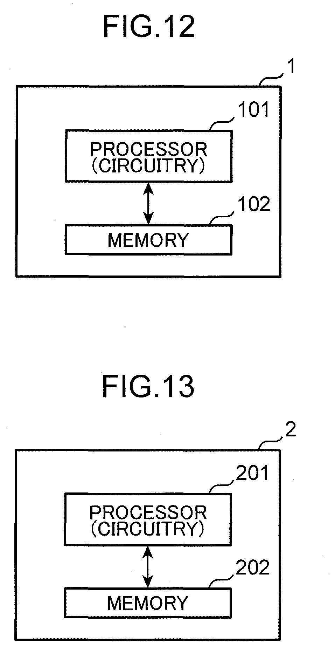

FIG. 12 is a diagram illustrating a simplified implementation example of the image encoder 1. The image encoder 1 has a configuration that includes a processor 101 and a memory 102 connected to the processor 101. However, the memory 102 may be included in the processor 101. The processor 101 is circuitry that executes information processing. The processor 101 includes a central processing unit (CPU) or a graphics processing unit (GPU). The memory 102 includes a semiconductor memory such as a read only memory (ROM) or a random access memory (RAM), a magnetic disk, or an optical disk. The memory 102 stores information necessary for the processor 101 to execute encoding processing and the like. For example, the memory 102 stores the input image D1, the specification information D2, the first image D3, and the second image D4. The memory 102 stores a program. When the processor 101 executes the program read from the memory 102, the processor 101 functions as the region specification unit 11, the first image generator 12, the second image generator 13, the first encoder 14, and the second encoder 15.

FIG. 13 is a diagram illustrating a simplified implementation example of the image decoder 2. The image decoder 2 has a configuration that includes a processor 201 and a memory 202 connected to the processor 201. However, the memory 202 may be included in the processor 201. The processor 201 is circuitry that executes information processing. The processor 201 includes a CPU or a GPU. The memory 202 includes a semiconductor memory such as a ROM or a RAM, a magnetic disk, or an optical disk. The memory 202 stores information necessary for the processor 201 to execute decoding processing and the like. For example, the memory 202 stores the first bitstream D5, the second bitstream D6, the first image D7, the specification information D8, and the second image D9. The memory 202 stores a program. When the processor 201 executes the program read from the memory 202, the processor 201 functions as the first decoder 21, the second decoder 22, and the image generator 23.

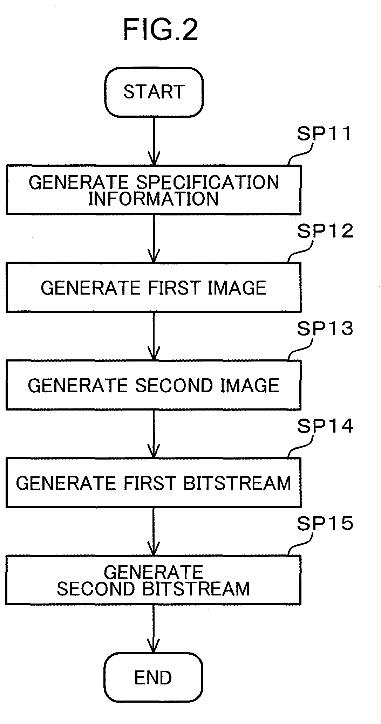

FIG. 2 is a flowchart illustrating a flow of processing executed by the image encoder 1.

First, in step SP11, the region specification unit 11 specifies a particular region in the input image D1 and generates the specification information D2 about the particular region.

Next, in step SP12, the first image generator 12 generates the first image D3 in which the particular region is processed in the input image D1.

Next, in step SP13, the second image generator 13 generates the second image D4 that contains image data associated with the particular region.

Next, in step SP14, the first encoder 14 encodes the first image D3 to generate and output the first bitstream D5.

Next, in step SP15, the second encoder 15 encodes the specification information D2 and the second image D4 to generate and output the second bitstream D6.

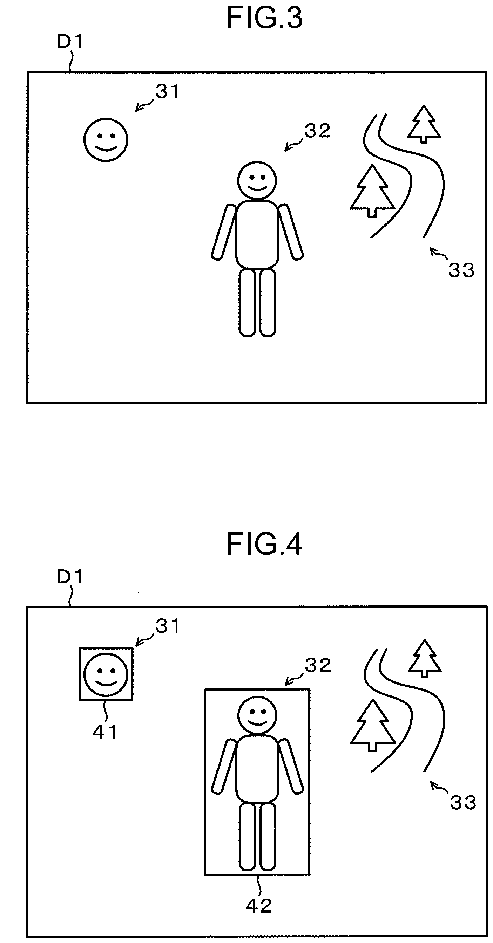

FIG. 3 is a diagram illustrating an example of the input image D1. The input image D1 contains an image 31 of a human face, an image 32 of a whole body including a human face, and an image 33 of a background. The human face is an example of personal privacy information. In addition to the human face, the privacy information is, for example, a vehicle tag and a nameplate of a house.

FIG. 4 is a diagram illustrating bounding boxes 41, 42 as an example of the particular region. The region specification unit 11 sets the bounding box 41, which surrounds a privacy region including the image 31 by a rectangle, as one of the particular regions. The region specification unit 11 also sets the bounding box 42, which surrounds a privacy region including the image 32 by a rectangle, as one of the particular regions. Since the image 33 does not contain privacy information, a bounding box is not set for the image.

The specification information D2 includes information indicating positions and sizes of the bounding boxes 41, 42 in the first image D3.

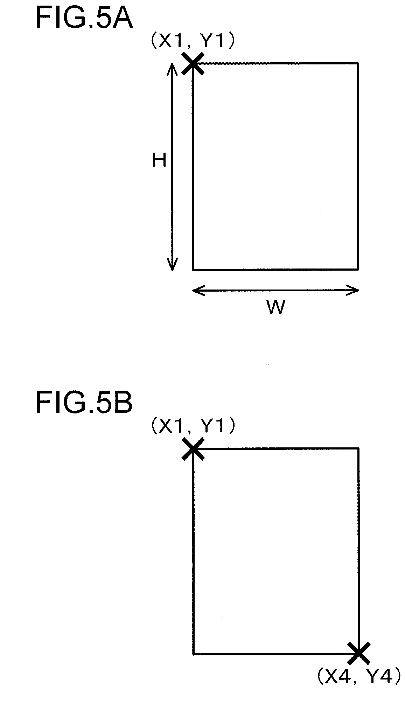

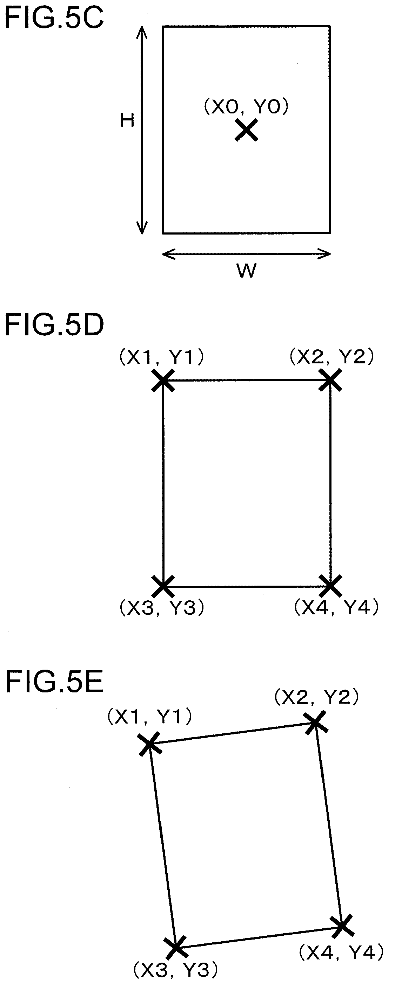

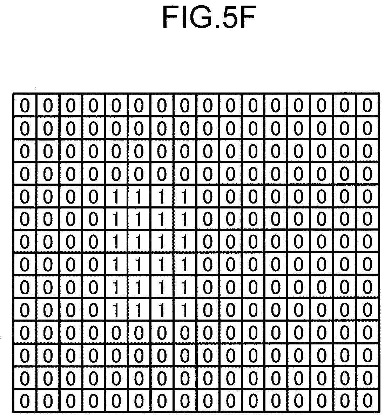

FIGS. 5A to 5F are diagrams each illustrating an example of the specification information D2. As illustrated in FIG. 5A, the specification information D2 includes position coordinates (X1, Y1) of a particular vertex of a bounding box, a vertical size H of the bounding box, and a horizontal size W of the bounding box. As illustrated in FIG. 5B, the specification information D2 includes position coordinates (X1, Y1) of a particular vertex of a bounding box and position coordinates (X4, Y4) of a vertex diagonally opposed to the particular vertex. As illustrated in FIG. 5C, the specification information D2 includes position coordinates (X0, Y0) of a center of a bounding box, a vertical size H of the bounding box, and a horizontal size W of the bounding box. As illustrated in FIG. 5D, the specification information D2 includes position coordinates (X1, Y1), (X2, Y2), (X3, Y3), (X4, Y4) of four vertices of a bounding box. In this case, as illustrated in FIG. 5E, a position and a size of even a slanting bounding box can be specified. As illustrated in FIG. 5F, the specification information D2 includes mask information to denote pixel positions inside the particular region by "1" and pixel positions outside the particular region by "0".

The specification information D2 includes information indicating a correspondence relationship between the bounding boxes 41, 42 in the first image D3 and the second image D4. If the second image D4 contains a plurality of bounding boxes 41, 42, the specification information D2 includes information indicating a correspondence relationship between the bounding boxes 41, 42 in the first image D3 and the bounding boxes 41, 42 in the second image D4.

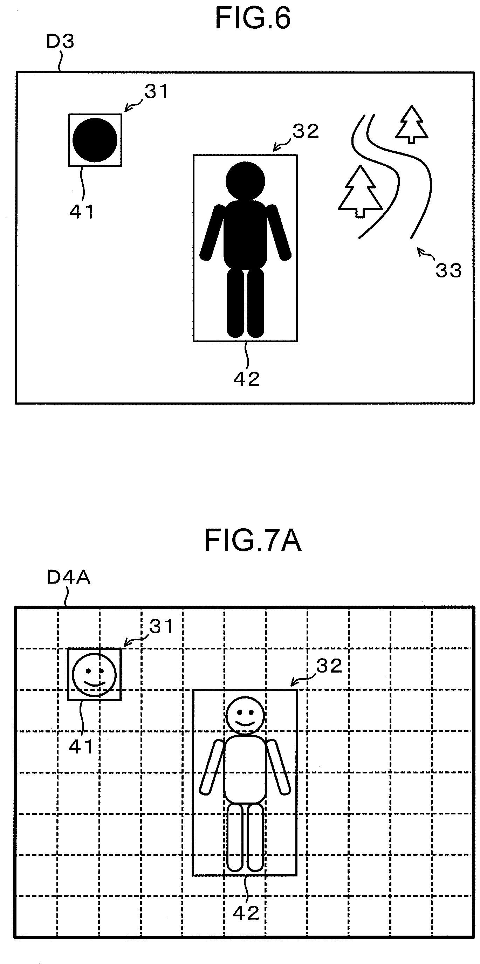

FIG. 6 is a diagram illustrating an example of the first image D3. A region inside each of the bounding boxes 41, 42 contained in the first image D3 includes an image in which masking is applied to a privacy region including privacy information. The first image generator 12, based on the specification information D2 input from the region specification unit 11, applies masking to the privacy regions in the input image D1. Examples of masking include blurring, mosaic, and silhouette processing. FIG. 6 illustrates an example in which silhouette processing is applied to the privacy regions.

FIGS. 7A to 7H are diagrams each illustrating an example of the second image D4.

As illustrated in FIG. 7A, a second image D4A has a picture size equal to that of the input image D1. In the second image D4A, rectangular regions partitioned by broken lines are equivalent to coding unit blocks. The coding unit block is a coding unit (CU), a coding tree unit (CTU), or the like and has a size of 8 pixels by 8 pixels, for example. In the second image D4A, image data for a region outside bounding boxes 41, 42 may be identical to that of the input image D1, or may be padded with meaningless data (for example, "0"). The positions and sizes of the bounding boxes 41, 42 in the second image D4A are equal to the positions and sizes of the bounding boxes 41, 42 in the input image D1. Since the picture size of the input image D1 is equal to the picture size of the second image D4A, the first encoder 14 can transmit the first bitstream D5 to the image decoder 2 by a base layer in a multilayer form standardized by H.266/VVC (Versatile Video Coding) or other standards. The second encoder 15 can transmit the second bitstream D6 to the image decoder 2 by an enhancement layer in the multilayer form. When the multilayer form is used, it is possible to encode the enhancement layer as information on a difference from the base layer. Thus, information on a difference in whole picture between the first image D3 with masked privacy information and the input image D1 with unmasked privacy information may be encoded as the second bitstream D6 without setting the bounding boxes. By allowing any user to access the base layer, the image processing system is designed to execute a machine task or provide human vision using an image with masked privacy information on the image decoder 2. By allowing only users who have a special right to access the enhancement layer, the system is designed to execute a machine task or provide human vision using an image with unmasked privacy information.

The second image D4 contains an image in which masking is not applied to the privacy regions included in the bounding boxes 41, 42. The second image contains image data associated with the particular region as an image to which masking is not applied. The image data associated with the particular region may be image data about a difference between the particular region inside the input image D1 and the particular region inside the first image D3, or may be just image data for the particular region inside the input image D1. When the particular region of the second image D4 presents the image data about the difference, an image before masking is applied to the privacy region is acquired by adding the first image D3 and the second image D4 in terms of the particular region. When the particular region of the second image D4 presents the image data inside the input image D1, an image before masking is applied to the privacy region is acquired by adding a value of the first image D3 multiplied by a weight value α and a value of the second image D4 multiplied by a weight value β in terms of the particular region. The weight values α, β each range from 0 to 1 inclusive and satisfy the relationship α + β = 1. When α = 0 and β = 1, the particular region of the second image D4 presents just the image data inside the input image D1. In this case, an image before masking is applied to the privacy region is acquired without using image data for the particular region inside the first image D3 at all. With β being set to 1 - α, the relationship may be provided only by one weight value α.

The second image D4 may be an intra-coded picture encoded by intra frame prediction. In other words, the second encoder 15 may encode the second image D4 using intra frame prediction. Since a picture of the second bitstream D6 is an intra-coded picture, factors such as movement of a target object over time are not required to be taken into consideration. This eliminates the need for storing a previous frame and calculating a difference from the previous frame, for example.

Meanwhile, the second image D4 may be an inter frame picture encoded by inter frame prediction. In other words, the second encoder 15 may encode the second image D4 using inter frame prediction. A reference picture used for the inter frame prediction may be a picture of the second image D4 that is acquired by decoding (local decoding) the second bitstream D6 or a picture of the first image D3 that is acquired by decoding (local decoding) the first bitstream D5. The picture of the second bitstream D6 is an inter frame picture, thus making it possible to reduce a coding amount.

While the second image D4A illustrated in FIG. 7A contains the plurality of bounding boxes 41, 42, different second images D4B, D4C may contain respective bounding boxes 41, 42.

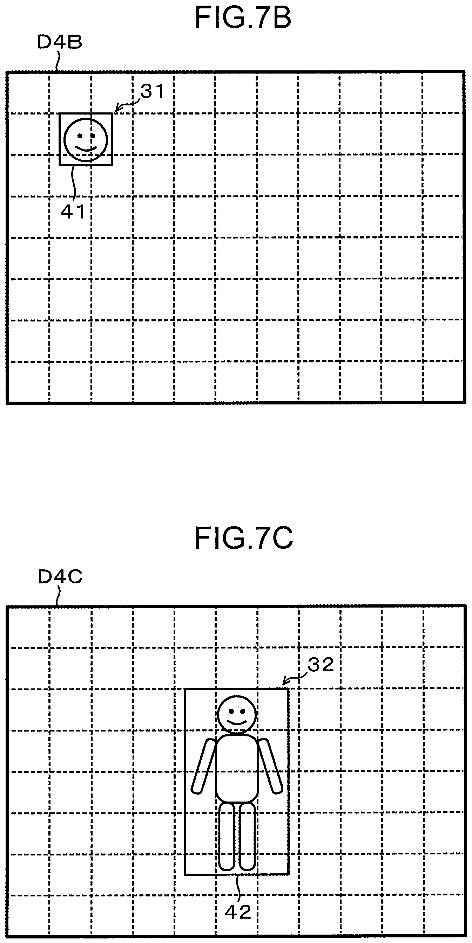

As illustrated in FIG. 7B, the second image D4B contains only the bounding box 41. The second image D4B has a picture size equal to that of the input image D1. In the second image D4B, image data for a region outside the bounding box 41 may be identical to that of the input image D1, or may be padded with meaningless data. The position and size of the bounding box 41 in the second image D4B are equal to the position and size of the bounding box 41 in the input image D1.

As illustrated in FIG. 7C, a second image D4C contains only the bounding box 42. The second image D4C has a picture size equal to that of the input image D1. In the second image D4C, image data in a region outside the bounding box 42 may be identical to that of the input image D1, or may be padded with meaningless data. The position and size of the bounding box 42 in the second image D4C are equal to the position and size of the bounding box 42 in the input image D1.

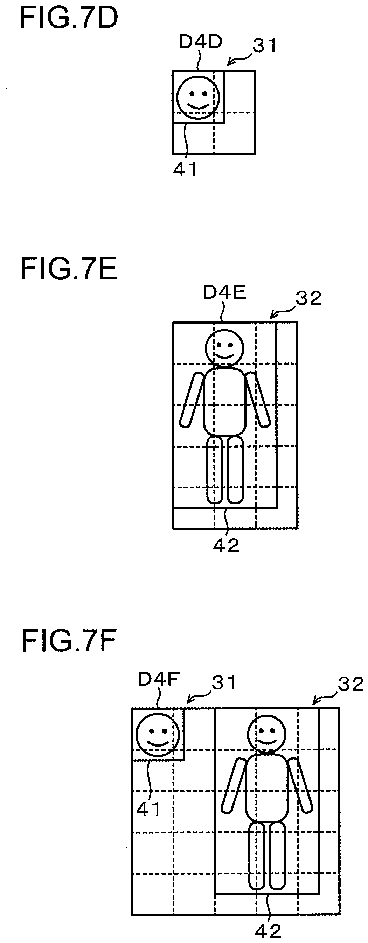

As illustrated in FIG. 7D, a second image D4D contains only a bounding box 41. In consideration of a change in the size of the bounding box 41 frame by frame, the second image D4D is made up of a minimum number (four in this example) of coding unit blocks to contain the bounding box 41, with the bounding box 41 being aligned to a top-left position. In the second image D4D, image data for a region outside the bounding box 41 is padded with meaningless data.

As illustrated in FIG. 7E, a second image D4E contains only a bounding box 42. In consideration of a change in the size of the bounding box 42 frame by frame, the second image D4E is made up of a minimum number (15 in this example) of coding unit blocks to contain the bounding box 42, with the bounding box 42 being aligned to a top-left position. In the second image D4E, image data in a region outside the bounding box 42 is padded with meaningless data.

As illustrated in FIG. 7F, a second image D4F contains bounding boxes 41, 42. Here 15 coding unit blocks containing the bounding box 42 are arranged on a right side of four coding unit blocks containing the bounding box 41. To define the second image D4F as a quadrangular region, six coding unit blocks are arranged beneath the four coding unit blocks containing the bounding box 41. In the second image D4F, image data for a region outside the bounding box 41,42 is padded with meaningless data.

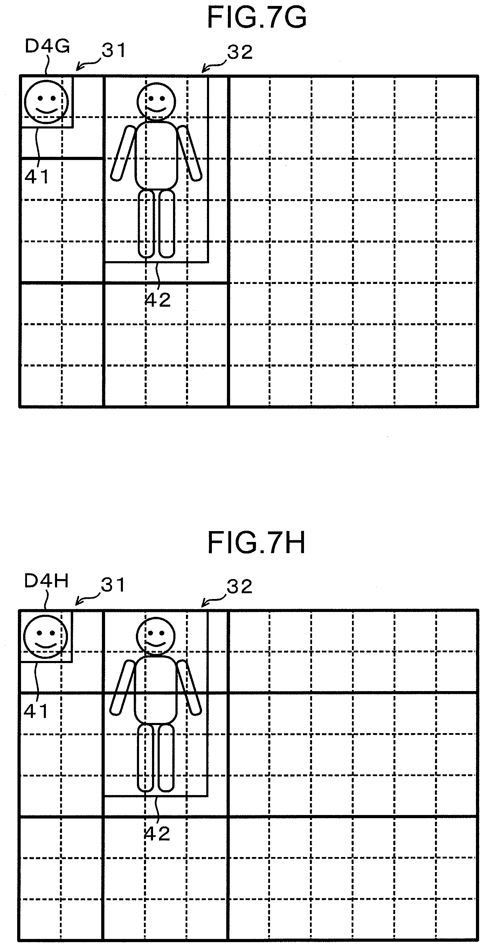

As illustrated in FIG. 7G, a second image D4G contains bounding boxes 41, 42. A picture of the second image D4G is divided into a plurality of subpictures standardized by VVC or other standards. The bounding box 41 is contained in the top-left subpicture, and the bounding box 42 is contained in the subpicture adjacent to a right side of the top-left subpicture. In the second image D4G, image data for a region outside the bounding box 41,42 is padded with meaningless data.

As illustrated in FIG. 7H, a second image D4H contains bounding boxes 41, 42. A picture of the second image D4H is divided into a plurality of tiles standardized by VVC or other standards. The bounding box 41 is contained in the top-left tile, and the bounding box 42 is contained in the tiles adjacent to right and lower right sides of the top-left tile. In the second image D4H, image data for a region outside the bounding box 41,42 is padded with meaningless data.

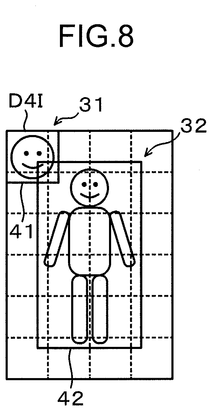

FIG. 8 is a diagram illustrating a first example in which a plurality of bounding boxes 41, 42 partially overlap each other in a second image D4I. As illustrated in FIG. 8, the second image D4I contains the bounding boxes 41, 42. Due to two persons moving closer to each other, the bounding boxes 41, 42 partially overlap each other. The second image D4I is made up of a minimum number (24 in this example) of coding unit blocks to contain the bounding boxes 41, 42, with the bounding box 41 being aligned to a top-left position. In the second image D4I, image data for a region outside the bounding box 41,42 is padded with meaningless data. The two persons have moved away from each other, causing the bounding boxes 41, 42 not to overlap. As a result, the second image D4I is divided into the second image D4D illustrated in FIG. 7D and the second image D4E illustrated in FIG. 7E. Even in a case in which the plurality of bounding boxes 41, 42 partially overlap each other, the second image may be divided into the second image D4D illustrated in FIG. 7D and the second image D4E illustrated in FIG. 7E, while containing an overlapped portion in accordance with specifications of the bounding boxes 41, 42. The second image D4I may be defined by either a subpicture or a tile instead of the plurality of coding unit blocks.

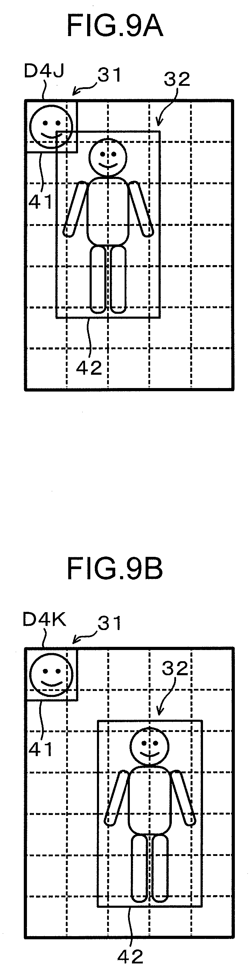

FIGS. 9A, 9B are diagrams illustrating a second example in which a plurality of bounding boxes 41, 42 partially overlap each other in second images D4J, D4K. As illustrated in FIG. 9A, the second image D4J contains the bounding boxes 41, 42. Due to two persons moving closer to each other, the bounding boxes 41, 42 partially overlap each other. The second image D4I is made up of a subpicture to contain the bounding boxes 41, 42, with the bounding box 41 being aligned to a top-left position. The number of coding unit blocks contained in the subpicture is set to a number (35 in this example) that is greater than the minimum number (24 in this example) of the coding unit blocks that contain the bounding boxes 41, 42. In the second image D4J, image data for a region outside the bounding box 41,42 is padded with meaningless data.

The two persons have moved away from each other, causing the bounding boxes 41, 42 not to overlap. As a result, as illustrated in FIG. 9B, the bounding boxes 41, 42 do not overlap each other in the second image D4K. The second image D4K contains the bounding boxes 41, 42 that do not overlap each other. If the bounding box 42 exits from a range of the second image D4K due to the two persons having moved further away from each other, the second image D4K is divided into different subpictures as in the second image D4G illustrated in FIG. 7G. The second images D4J, D4K may each be defined by a tile or a plurality of coding unit blocks instead of the subpicture.

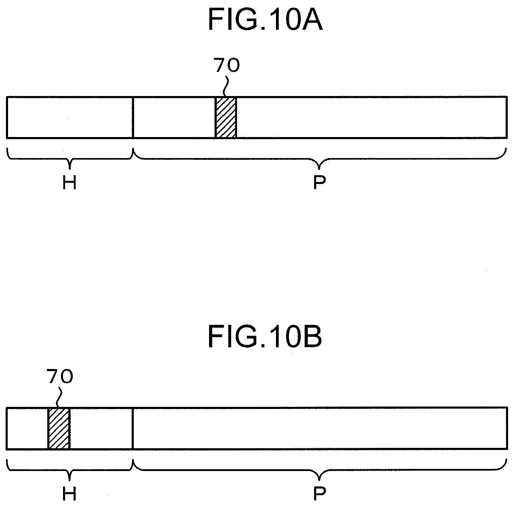

FIG. 10A is a diagram illustrating a first example of a data structure of a bitstream D6. The bitstream D6 includes a header area H in which management information or the like is stored and a payload area P in which image data is stored. The second encoder 15 stores encoded data of the second image D4 into the payload area P. The second encoder 15 also stores encoded data 70 of the specification information D2 into a predetermined location of the payload area P.

FIG. 10B is a diagram illustrating a second example of the data structure of the bitstream D6. In a similar way to FIG. 10A, the bitstream D6 includes a header area H and a payload area P. The second encoder 15 stores encoded data of the second image D4 into the payload area P. The second encoder 15 also stores encoded data 70 of the specification information D2 into a predetermined location of the header area H. The predetermined location is, for example, a supplemental enhancement information (SEI) region for storing additional information. The predetermined location may be a region such as a video parameter set (VPS), a sequence parameter set (SPS), a picture parameter set (PPS), a picture header (PH), a slice header (SH), an adaptation parameter set (APS), or a tile header. By storing the specification information D2 in the header area H of the bitstream D6, the second decoder 22 can readily acquire the specification information D8 by decoding. By storing the specification information D2 in the SEI region, the specification information D2 can be readily handled as additional information.

Out of the specification information D2, the first encoder 14 may store information indicating positions and sizes of the bounding boxes 41, 42 in the first image D3 into a predetermined location of a header area H of the first bitstream D5. The predetermined location may be, for example, an annotated region SEI (ARSEI) region for storing bounding box information. This enables the use of bounding box information, which is basically included in the header area H of the first bitstream D5, as part of the specification information D2.

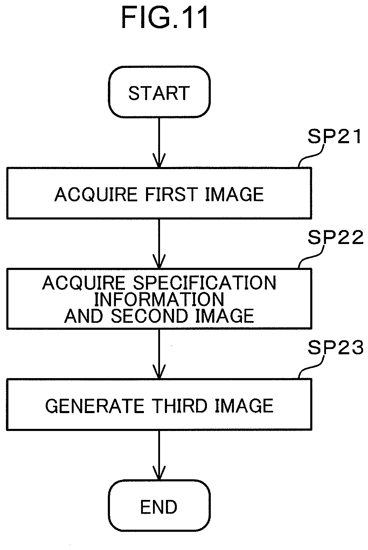

FIG. 11 is a flowchart illustrating a flow of processing executed by the image decoder 2.

First, in step SP21, the first decoder 21 decodes the first bitstream D5 it has received from the image encoder 1 to acquire the first image D7 equivalent to the first image D3.

Next, in step SP22, the second decoder 22 decodes the second bitstream D6 it has received from the image encoder 1 to acquire the specification information D8 equivalent to the specification information D2 and the second image D9 equivalent to the second image D4.

Next, in step SP23, the image generator 23 generates the third image D10 equivalent to the input image D1, based on the first image D7, the specification information D8, and the second image D9.

In a similar way to the first image D3 at the image encoder 1, a region inside each of the bounding boxes 41, 42 contained in the first image D7 at the image decoder 2 includes an image in which masking is applied to a privacy region including privacy information. Examples of masking include blurring, mosaic, and silhouette processing.

In a similar way to the second image D4 and the input image D1 at the image encoder 1, the second image D9 and the third image D10 at the image decoder 2 contain images in which masking is not applied to privacy regions included in the bounding boxes 41, 42. The second image D9 may contain image data about a difference between the bounding boxes 41, 42 inside the first image D7 and the bounding boxes 41, 42 inside the third image D10, or may contain image data for the bounding boxes 41, 42 in the third image D10.

The second decoder 22 decodes either the payload area P or the header area H of the second bitstream D6 to acquire the specification information D8. Out of the specification information D8, information indicating positions and sizes of the bounding boxes 41, 42 in the first image D7 may be stored in the header area H of the first bitstream D5. In this case, the first decoder 21 decodes the header area H of the first bitstream D5 to acquire the information.

In a similar way to the specification information D2 at the image encoder 1, the specification information D8 at the image decoder 2 includes information indicating positions and sizes of the bounding boxes 41, 42 in the first image D7. The specification information D8 may further include information indicating a correspondence relationship between the bounding boxes 41, 42 in the first image D7 and the second image D9.

In a similar way to the second image D4 at the image encoder 1, the second image D9 at the image decoder 2 may contain image data for one of the plurality of bounding boxes 41, 42, or may contain image data for the plurality of bounding boxes 41, 42. In the second image D9, the bounding boxes 41, 42 may be included in one or more coding unit blocks that compose the picture of the second bitstream D6, or may be included in either a subpicture or a tile that composes the picture of the second bitstream D6. Further, the second image D9 may contain image data associated with the plurality of bounding boxes 41, 42.

The picture size of the first bitstream D5 and the picture size of the second bitstream D6 may be equal to each other. The first bitstream D5 may be transmitted from the image encoder 1 to the image decoder 2 by a base layer in a multilayer form, and the second bitstream D6 may be transmitted from the image encoder 1 to the image decoder 2 by an enhancement layer in the multilayer form. The first bitstream D5 and the second bitstream D6 may be transmitted from the image encoder 1 to the image decoder 2 by the different transmission lines NW1, NW2. The second bitstream D6 may be an intra-coded picture for which intra frame prediction is performed, or may be an inter frame picture for which inter frame prediction is performed. A reference picture used for the inter frame prediction may be a picture of the second image D9 that is acquired by decoding the second bitstream D6 or a picture of the first image D7 that is acquired by decoding the first bitstream D5.

### (Effects)

The image encoder 1 and the image decoder 2 according to the present embodiment are designed to protect personal privacy information by not allowing privacy information to be included in the first bitstream D5. By transmitting the second image D4 containing privacy information as the second bitstream D6 and enabling the image decoder 2 to generate the third image D10 based on the second image D9, the image processing system is designed to execute a machine task or provide human vision using privacy information on the image decoder 2.

### Industrial Applicability

The present disclosure is particularly useful for application to an image processing system including an image encoder that transmits an image and an image decoder that receives an image.

## Claims

1. An image decoder comprising:
circuitry; and
a memory connected to the circuitry,
wherein, in operation, the circuitry
decodes a first bitstream to acquire a first image,
decodes a second bitstream to acquire specification information specifying a particular region in the first image and a second image containing image data for the particular region, and
generates a third image based on the first image, the specification information, and the second image.

2. The image decoder according to claim 1, wherein the particular region in the first image includes an image in which masking is applied to a privacy region including privacy information.

3. The image decoder according to claim 2, wherein the second image and the third image each contain an image in which the masking is not applied to the privacy region included in the particular region.

4. The image decoder according to claim 1, wherein
the particular region in the first image includes an image in which masking is applied to a privacy region including privacy information,
the second image contains an image in which the masking is not applied to the privacy region included in the particular region, and
the circuitry, in generation of the third image,
generates the third image using the first image for an application of an image with m asked privacy information, and
generates the third image using the first image and the second image for an application of an image with unmasked privacy information.

5. The image decoder according to claim 1, wherein the specification information includes information indicating a position and a size of the particular region in the first image.

6. The image decoder according to claim 5, wherein the specification information further includes information indicating a correspondence relationship between the particular region in the first image and the second image.

7. The image decoder according to claim 1, wherein the circuitry decodes a header area of the second bitstream to acquire the specification information.

8. The image decoder according to claim 1, wherein
out of the specification information, information indicating a position and a size of the particular region in the first image is stored in a header area of the first bitstream, and
the circuitry decodes the header area of the first bitstream to acquire the information.

9. The image decoder according to claim 1, wherein the image data contained in the second image is image data about a difference between the particular region inside the first image and the particular region inside the third image.

10. The image decoder according to claim 1, wherein the image data contained in the second image is image data for the particular region in the third image.

11. The image decoder according to claim 1, wherein
the particular region includes a plurality of particular regions, and
a picture of the second bitstream includes the image data for one of the plurality of particular regions.

12. The image decoder according to claim 1, wherein
the particular region includes a plurality of particular regions, and
a picture of the second bitstream includes the image data for the plurality of particular regions.

13. The image decoder according to claim 1, wherein the particular region is included in one or more coding unit blocks that compose a picture of the second bitstream.

14. The image decoder according to claim 1, wherein the particular region is included in either a subpicture or a tile that composes a picture of the second bitstream.

15. The image decoder according to claim 1, wherein
the particular region includes a plurality of particular regions, and
the second image contains the image data associated with the plurality of particular regions.

16. The image decoder according to claim 1, wherein a picture size of the first bitstream and a picture size of the second bitstream are equal to each other.

17. The image decoder according to claim 1, wherein a picture of the second bitstream is an intra-coded picture for which intra frame prediction is performed.

18. The image decoder according to claim 1, wherein a picture of the second bitstream is an inter frame picture for which inter frame prediction is performed using a reference picture that is acquired by decoding either the second bitstream or the first bitstream.

19. The image decoder according to claim 1, wherein
the first bitstream is transmitted from an image encoder to the image decoder by a base layer in a multilayer form, and
the second bitstream is transmitted from the image encoder to the image decoder by an enhancement layer in the multilayer form.

20. The image decoder according to claim 1, wherein the first bitstream and the second bitstream are transmitted from an image encoder to the image decoder by different transmission lines.

21. An image encoder comprising:
circuitry; and
a memory connected to the circuitry,
wherein, in operation, the circuitry
specifies a particular region in an input image, generates specification information about the particular region,
generates a first image in which the particular region is processed in the input image,
generates a second image that contains image data associated with the particular region,
encodes the first image to generate and output a first bitstream, and
encodes the specification information and the second image to generate and output a second bitstream.

22. The image encoder according to claim 21, wherein the particular region in the first image includes an image in which masking is applied to a privacy region including privacy information.

23. The image encoder according to claim 22, wherein the second image contains an image in which the masking is not applied to the privacy region included in the particular region.

24. The image encoder according to claim 21, wherein the specification information includes information indicating a position and a size of the particular region in the first image.

25. The image encoder according to claim 24, wherein the specification information further includes information indicating a correspondence relationship between the particular region in the first image and the second image.

26. The image encoder according to claim 21, wherein the circuitry stores the specification information in a header area of the second bitstream.

27. The image encoder according to claim 21, wherein the circuitry stores information out of the specification information in a header area of the first bitstream, the information indicating a position and a size of the particular region in the first image.

28. The image encoder according to claim 21, wherein the image data contained in the second image is image data about a difference between the particular region inside the input image and the particular region inside the first image.

29. The image encoder according to claim 21, wherein the image data contained in the second image is image data for the particular region in the input image.

30. The image encoder according to claim 21, wherein
the particular region includes a plurality of particular regions, and
a picture of the second bitstream includes the image data for one of the plurality of particular regions.

31. The image encoder according to claim 21, wherein
the particular region includes a plurality of particular regions, and
a picture of the second bitstream includes the image data for the plurality of particular regions.

32. The image encoder according to claim 21, wherein the particular region is included in one or more coding unit blocks that compose a picture of the second bitstream.

33. The image encoder according to claim 21, wherein the particular region is included in either a subpicture or a tile that composes a picture of the second bitstream.

34. The image encoder according to claim 21, wherein
the particular region includes a plurality of particular regions, and
the second image contains the image data associated with the plurality of particular regions.

35. The image encoder according to claim 21, wherein a picture size of the first bitstream and a picture size of the second bitstream are equal to each other.

36. The image encoder according to claim 21, wherein a picture of the second bitstream is an intra-coded picture for which intra frame prediction is performed.

37. The image encoder according to claim 21, wherein a picture of the second bitstream is an inter frame picture for which inter frame prediction is performed using a reference picture that is acquired by decoding either the second bitstream or the first bitstream.

38. The image encoder according to claim 21, wherein the circuitry transmits the first bitstream to an image decoder by a base layer in a multilayer form and transmits the second bitstream to the image decoder by an enhancement layer in the multilayer form.

39. The image encoder according to claim 21, wherein the circuitry transmits the first bitstream and the second bitstream to an image decoder by different transmission lines.

40. An image decoding method comprising:
decoding a first bitstream to acquire a first image;
decoding a second bitstream to acquire specification information specifying a particular region in the first image and a second image containing image data for the particular region; and
generating a third image based on the first image, the specification information, and the second image.

41. An image encoding method comprising:
specifying a particular region in an input image, generating specification information about the particular region;
generating a first image in which the particular region is processed in the input image;
generating a second image that contains image data associated with the particular region;
encoding the first image to generate and output a first bitstream; and
encoding the specification information and the second image to generate and output a second bitstream.
